# EUROPÄISCHE PATENTSCHRIFT

(11) **EP 0 541 850 B1**
(45) Veröffentlichungstag und Bekanntmachung des Hinweises auf die Patenterteilung: **09.08.1995**
(21) Anmeldenummer: 91119467.8
(22) Anmeldetag: 14.11.1991
(51) Int. Cl.: B65G 23/14

(54) **Kurvengängiges Plattenband**
Curvilinear plate conveyor
Transporteur à palettes curviligne

(43) Veröffentlichungstag der Anmeldung: 19.05.1993
(73) Patentinhaber: CARL SCHENCK AG, D-64273 Darmstadt (DE)
(72) Erfinder: Proske, Hans, D-6107 Reinheim (DE)
(74) Vertreter: Brandt, Ernst-Ulrich, Dipl.-Phys., Dipl.-Ing.

(56) Entgegenhaltungen:
- FR-A- 2 088 498
- US-A- 3 379 300
- US-A- 3 410 390
- US-A- 3 881 592

## Beschreibung

Die Erfindung betrifft einen kurvengängigen Plattenbandförderer, nach dem Oberbegriff des Anspruches 1.

Beim Zusammenbau von Bauteilen, die aus mehreren Bauelementen bestehen, werden Plattenbandförderer oder kurvengängige Plattenbandförderer benutzt, die beispielsweise als Endlosband ausgestaltet in einem Oval verlaufen. Hierbei ist es dann möglich, Montagestellen nebeneinander entsprechend dem Fertigungsfortschritt des Bauteils anzuordnen. Ähnliches gilt auch bei der Demontage von aus Elementen bestehenden Bauteilen oder bei der Aufteilung und Sortierung von Stückgut. Auch hier sind im allgemeinen entlang eines kurvengängigen Plattenbandes, welches wieder zu seinem Ausgang oder zu seiner Aufgabestelle zurückführt, Sortierplätze oder Entnahmeplätze vorgesehen, so daß am Ende des Aufteilvorgangs das leere Plattenband wieder erneut mit zu verteilendem oder auszusortierendem Gut belegt werden kann. Gleiches gilt auch bei der Montage von aus mehreren Elementen bestehenden Bauteilen, beispielsweise Motoren für Kraftfahrzeuge. Dort wird am Ende der montierte Antriebsmotor beispielsweise vom Plattenband genommen, während direkt nachfolgend das erste Grundelement für einen neu aufzubauenden Motor auf den kurvengängigen Plattenbandförderer aufgesetzt wird.

Als Antrieb für derartige Plattenbandförderer dienen mit Zahnrädern zusammenarbeitende Antriebsketten, welche sich im allgemeinen über die gesamte Länge des Plattenbandförderers erstrecken. Derartige Antriebe sind bekanntermaßen sehr laut, störanfällig und erfordern einen hohen Wartungsaufwand. Darüber hinaus verlangt der stets wechselnde Formschluß zwischen Kettenrad und Kette, auch wenn die Kette beispielsweise kunststoffummantelt ist, eine stetige Schmierung, welche zur Verschmutzung der Anlage und des Förderguts führt; der Verschleiß derartiger Plattenbandantriebe ist beachtlich hoch. Weiterhin können derartige Antriebe nicht zum Tragen der Förderplatten herangezogen werden, sondern es müssen darüber hinaus beispielsweise parallel verlaufende Rollenbahnen unter den einzelnen Förderplatten in Förderrichtung angeordnet werden, auf welchen sich die zu einem kurvengängigen Plattenband vereinigten Förderplatten abstützen.

Durch das deutsche Gebrauchsmuster 85 35 683 ist bereits eine Fördereinrichtung mit angetriebenen armierten Gurten zum Transport von beladenen Paletten bekannt geworden, bei der über die gesamte Förderstrecke parallel nebeneinander angeordnet derartige armierte Fördergurte verlaufen, auf welchen sich die zu fördernden beladenen Paletten abstützen und über die gesamte Förderstrecke transportiert werden. Weiterhin ist durch die europäische Patentanmeldung 01 91 116 ein Antrieb von Paletten bekannt geworden, bei welchem in einer Antriebsstation ein Antrieb der Palette durch einen mit einer Gegenhalterung zusammenwirkenden Preßantrieb geschieht. Derartige Antriebe sind für kurvengängige Plattenbänder nicht sicher einsetzbar. Darüber hinaus ist bei einer Verschmutzung der Reibfläche an der Palette ein sicherer Antrieb durch Verringerung des Reibschlusses nicht mehr möglich.

Aus der US 3 379 300 ist ein gattungsgemäßer Plattenbandförderer bekannt, bei welchem die Förderplatten über die gesamte Förderbahn auf einer Vielzahl von versetzt zueinander angeordneter Gurtförderern und auf in Förderrichtung verlaufenden Abstützungen abgestützt sind. Der Antrieb erfolgt somit in sehr aufwendiger Weise über den gesamten Förderweg.

Der vorliegenden Erfindung liegt die Aufgabe zugrunde, auf einfache Weise ein Plattenband anzutreiben, ohne den durch Formschluß auftretenden Verschleiß bei gleichzeitiger Geräuscharmut, wobei auch bei Wartung keine zusätzlichen Hilfsgeräte zum Abstützen der Platten eingesetzt werden müssen, und wobei der Gurtförderer den Plattenbandförderer nur in einem Teilbereich des Förderverlaufes antreibt. Diese Aufgabe wird gemäß den kennzeichnenden Merkmalen des Anspruchs 1 gelöst.

Durch die Lösung nach Anspruch 1 wird erreicht, daß im Plattenbandfördererverlauf auch im geraden Verlauf eines kurvengängigen Plattenbandförderers ein praktisch geräuschfreier Antrieb und auch eine praktisch geräuschfreie Abbremsung derartiger Bänder ermöglicht wird. Zufolge der Erstreckung nur über einen bestimmten Bereich des Förderverlaufs ist eine einfache Überwachung und Wartung des Antriebes möglich.
Gemäß der vorteilhaften Ausgestaltung nach Anspruch 3 können bei einem in der Horizontalen verlegten kurvengängigen Plattenbandförderer die einzelnen die Förderplatten gelenkig verbindenden Kettenglieder mit einem Gurtförderer in Reibverbindung treten, dessen Antriebs- und Umlenkrollen vertikale Achsrichtungen aufweisen, wobei der angetriebene Gurtförderer sich selbst in horizontaler Richtung erstreckt. Damit wird es auch möglich, den kurvengängigen Plattenbandförderer lediglich im Bereich seiner Kurven anzutreiben und dort den Antrieb mittels Reibung zu bewirken.

Bei Änderung der Drehrichtung des Gurtförderers wird darüber hinaus eine erhöhte Bremswirkung erreicht, die bei den bisherigen Antrieben von Plattenbandförderern nicht möglich waren.

Durch die Erfindung wird eine beachtliche Vereinfachung und Verbilligung des Antriebs derartiger Plattenbandförderer erreicht und es kann darüber hinaus ohne längeres Stillsetzen dieser Fördereinrichtung, falls erforderlich, ein Nachspannen des Antriebs durchgeführt werden, was bei den bisherigen Antrieben ohne großen Aufwand und erneute Justierung nicht möglich ist.

In Ausgestaltung dieses Erfindungsgedankens wird für kurvengängige Plattenbandförderer vorgeschlagen, daß die Förderplatten selbst in horizontaler Richtung von den gelenkig verbundenen an in Förderrichtung verlaufenden Anschlägen entlang geführten Kettengliedern geführt werden und daß die Führung in vertikaler Richtung im Antriebsbereich von dem angetriebenen Gurtförderer und dem ihm zugeordneten Abstützungen der anderen Seite bewirkt wird. Diese Ausgestaltung bewirkt eine zusätzliche Erhöhung der Reibung, da im Antriebsbereich die einzelnen Förderplattenelemente zufolge ihres Gewichts den Reibschluß vergrößern.

In noch weiterer Ausgestaltung der Erfindung wird für kurvengängige Plattenbandförderer vorgeschlagen, daß die gelenkig verbundenen Kettenglieder von den Schenkeln einer U-Schiene im Abstand von deren Steg mittels an den Kettengliedern angeordneten Rollen geführt werden. Durch diese Ausgestaltung wird erreicht, daß bei erforderlich werdenden Wartungsarbeiten nicht zusätzlich Hilfsmittel zur Abstützung der Förderplatten oder Kettenglieder herangezogen werden müssen, sondern daß sich die einzelnen
Förderplatten über die Kettenglieder bei Entfernen des Gurtförderers zufolge Aufstützen der Kettenglieder auf dem Steg der U-Schiene die Einheit Kettenglieder und Förderplatten ohne zusätzliche weitere Unterstützung abstützen. Dies gilt auch dann, wenn anstelle des Gurtförderers beispielsweise eine Förderplattform ausgetauscht wird.

Durch die Erfindung kann somit der Antrieb insbesondere für kurvengängige Plattenbandförderer an der für eine Wartung günstigsten Stelle erfolgen, so daß auch dieser Antrieb im Falle von Wartungsarbeiten ohne jeden Aufwand herausgenommen werden kann, ohne daß zusätzliche Bremseinrichtungen vorgesehen werden müssen, da die reibschlüssige Verbindung über einen Teil des Förderwegs des Förderers gleichzeitig bei Stillstand auch als Festhalteeinrichtung dient.

In der nachfolgenden Beschreibung wird die Erfindung anhand von Ausführungsbeispielen näher erläutert.

Es zeigen:
- Figur 1: Einen Antrieb eines kurvengängigen Plattenbandes in einer Kurve
- Figur 2: Eine Draufsicht auf ein kurvengängiges Plattenband mit Antrieb im geraden Teil seines Förderverlaufs
- Figur 3: Einen Schnitt durch ein kurvengängiges Plattenband mit Antrieb, Abstützung und Führung
- Figur 4: Einen Schnitt durch eine die Förderplatten gelenkig verbindenden Kette und
- Figur 5: Einen Schnitt durch einen vertikal umlaufenden Plattenbandförderer mit Antrieb.

In der nachfolgenden Beschreibung werden die selben Bauteile in den verschiedenen Figuren mit gleichen Bezugsziffern bezeichnet.

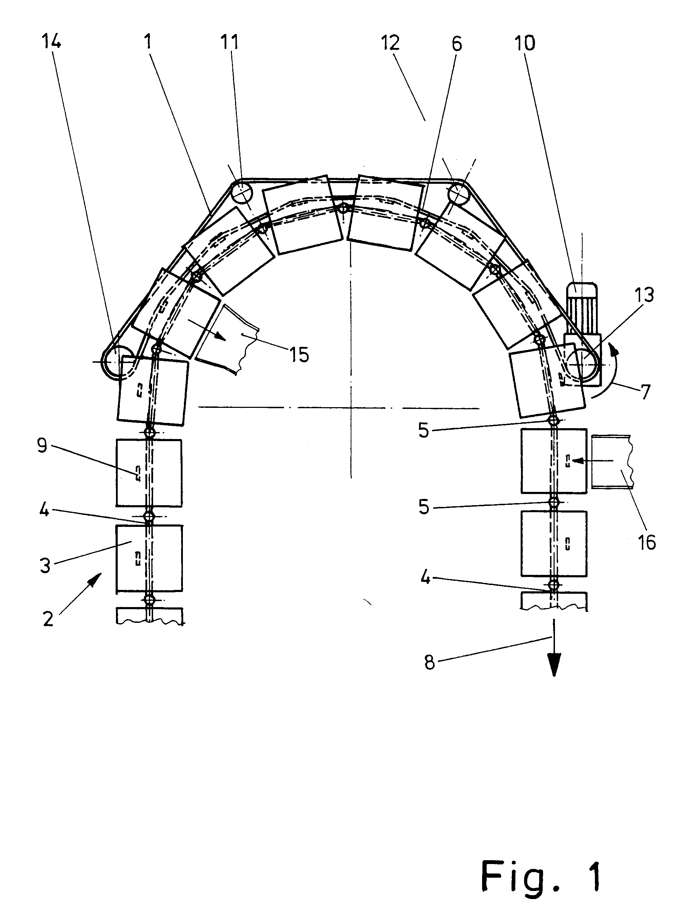

Gemäß Figur 1 treibt ein Gurtförderer 1 einen Plattenbandförderer 2 im Bereich eines Kurvenstücks an. Der Plattenbandförderer 2 besteht aus einzelnen Förderplatten 3, die gegenseitig so beabstandet sind, daß auch im Kurvenverlauf eine gegenseitige Berührung der Förderplatten 3 nicht geschehen kann.

Die einzelnen Förderplatten 3 sind mit gelenkig miteinander verbundenen Kettenglieder 4 verbunden, wobei die zwischen den Kettengliedern befindlichen Gelenkpunkte 5 gleichzeitig die Führung des Plattenbandförderers 2 beispielsweise in einer nicht dargestellten U-Schiene bewirken.

Im Kurvenbereich des Gurtförderers 1 ist der eine Schenkel der U-Schiene durch das rücklaufende Trum 6 des Gurtförderers 1 ersetzt, so daß bei einer Bewegung des Gurtförderers 1 in Pfeilrichtung 7 eine Mitnahme des Plattenbandförderers 2 in Richtung des Pfeils 8 über die Gelenkpunkte 5 geschieht.

Anstelle der Mitnahme des Plattenbandförderers 2 im Bereich der Gelenkpunkte 5 können auch an der Unterseite der einzelnen Förderplatten 3 außermittig angeordnete, senkrecht nach unten weisende Mitnehmer 9 vorgesehen sein, die in Wirkverbindung mit dem rücklaufenden Trum 6 treten.

Durch Umkehr der Antriebsrichtung im Antriebsmotor 10 des Gurtförderers 1 wird der Plattenbandförderer 2 in kürzester Zeit abgebremst. Weitere Umlenkrollen 11, 12 können gleichzeitig als Spannrollen ausgebildet sein, die es gestatten, während der Förderung von Gut, insbesondere Stückgut auf dem Plattenbandförderer 2, die Vorspannung im Gurtförderer 1 zu ändern. Im Ausführungsbeispiel gemäß Figur 1 sind die Achsen von Antriebsrolle 13 und Umlenkrolle 14 und auch die Achsen der weiteren Umlenkrollen 11, 12 vertikal für einen in einer Horizontalebene verlaufenden Gurtbandförderer angeordnet.

Am Gurtbandförderer ist der letzte Abnahmeplatz mit 15 bezeichnet, während der erste Aufgabeplatz mit 16 bezeichnet ist. In dem Raum zwischen Abnahmeplatz 15 und Aufgabeplatz 16 kann beispielsweise die Reinigung der einzelnen Förderplatten 3 durchgeführt werden.

Auch ist es möglich, einen derartigen Plattenbandförderer 2 über verschiedene Etagen zu verlegen, so daß auch trotz des nur über einen bestimmten Bereich erfolgenden Antriebs mittels reibschlüssiger Verbindung zwischen Gurtförderer 1 und Plattenbandförderer 2 Steilstücke überwunden werden können.

Anstelle eines dargestellten Abnahmeplatzes 15 und Aufgabeplatzes 16 ist es jedoch auch möglich, eine automatische Aufgabe auf das Plattenförderband 2 durchzuführen und entsprechend vorgegebener Informationen an den nicht dargestellten Stückgütern eine automatische Abnahme vom Plattenförderband 2 durchzuführen.

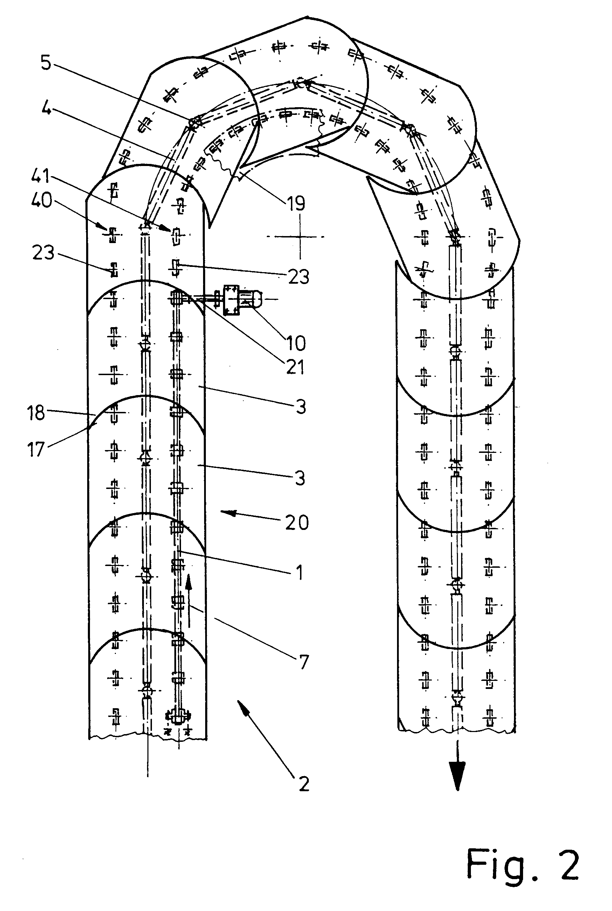

Der in Figur 2 dargestellte Plattenbandförderer 2 besitzt Förderplatten 3, welche direkt aneinander anschließen, wobei eine konvexe Vorderseite 17 der einen Förderplatte 3 mit einer konkaven Hinterseite 18 der vorhergehenden Förderplatte 3 zusammenwirkt. Damit wird erreicht, daß beim Montieren eines Bauteils aus mehreren Elementen vermieden wird, daß eventuelle Befestigungsteile zwischen die einzelnen Förderplatten 3 geraten bzw. daß den Antrieb des Plattenbandförderers 2 schädigende Teile zwischen den einzelnen Förderplatten 3 hindurchtreten können. Zufolge des Konvex-Konkav-Anschlusses der einzelnen Förderplatten 3 wird eine Kurvengängigkeit in der Ebene erreicht und durch Einbau einer Schürze 19 im Bereich der Umlenkung eine Beeinträchtigung des Betriebs des Plattenförderbandes 2 vermieden.

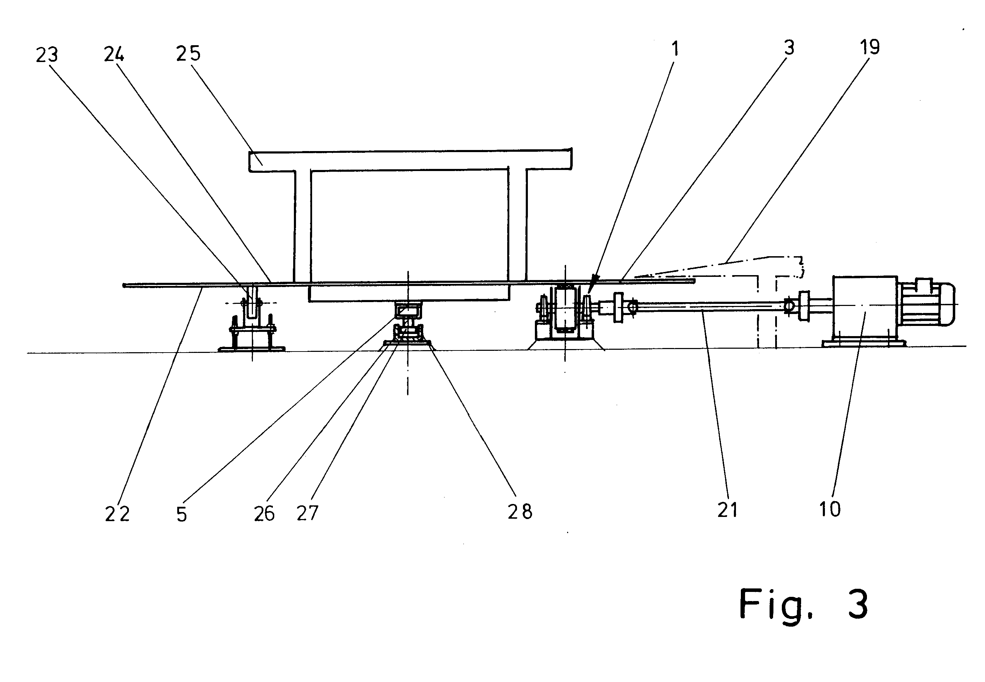

Auf einem geradlinig verlaufenden Stück 20 des Plattenbandförderers 2 ist der Antrieb vorgesehen. Er besteht aus einem Antriebsmotor 10, der über eine Gelenkwelle 21 einem Gurtförderer 1 antreibt, der in Pfeilrichtung 7 umläuft. Anstelle des Gurtförderers 1 kann auch eine aus armierten Gummibändern bestehende Fördereinrichtung treten, die sich ihrerseits umlaufend auf einer Unterlage abstützt, während die Oberseite reibschlüssig mit der Unterseite 22 (vgl. Figur 3) der Förderplatten 3 zusammenwirkt.

Im Falle des Ausführungsbeispiels nach Figur 2 stützt sich die Plattenförderbandunterseite 22 auf den angetriebenen Gurtförderer 1 im Bereich des Antriebs ab.

Auf der Unterseite des Plattenbandförderers 2 sind in der Mitte einer jeden Förderplatte 3 Gelenkpunkte 5, die mit Kettengliedern 4 miteinander verbunden sind, zur Führung des kurvengängigen Plattenbandes vorgesehen.

Wie in Figur 2 weiter schematisch dargestellt, wird das Plattenförderband 2 von zwei Reihen 40, 41 hintereinander angeordneter Abstützrollen 23 rollbar auf diesen abgestützt. Lediglich im Bereich des Gurtförderers 1 werden die Abstützrollen 23 der Reihe 41 ersetzt durch diesen. Damit übernimmt der Gurtförderer 1 gleichzeitig die Funktion der Absützrollen 23, was bei den bisherigen Antrieben nicht möglich war. Der Gurtförderer 1 kann ebenso wie der in Figur 1 gezeigte Gurtförderer 1 zum Abbremsen des Plattenbandförderers 2 dienen und bietet darüber hinaus auch die Gewähr, daß bei einem Austausch des Antriebsmotors 10 ein eindeutiges Festhalten des Förderbandes zufolge Reibschluß gewährt ist.

Figur 3 zeigt einen Schnitt durch eine Förderplatte 3, deren Unterseite 22 zum einen auf einer Abstützrolle 23 aufliegt und zum anderen mit dem Gurtförderer 1 reibschlüssig zusammenwirkt.

Auf der Plattenbandoberseite 24 ist ein Montageträger 25 dargestellt, auf dem ein zu montierendes Teil, welches mittels des kurvengängigen Plattenbandförderers 2 an einzelnen Arbeitsplätzen vorbeigeführt wird, zusammengestellt wird.

An der Plattenbandunterseite 22 ist vom Gelenkpunkt 5 ausgehend ein vertikal nach unten sich erstreckender Zapfen 26 vorgesehen, der an seinem unteren Ende eine Führungsrolle 27 trägt. Im Ausführungsbeispiel nach Figur 3 wird die Führungsrolle 27 in einer U-Schiene 28 im Abstand über deren Steg geführt.

Der Gurtförderer 1 ersetzt in seinem Antriebsbereich die sonst parallel zueinander verlaufenden Abstützrollen 23.

Bei einer Demontage des Antriebsmotors 10 und der Gelenkwelle 21 kann der Gurtförderer beispielsweise durch Absenken unter dem Plattenbandförderer 2 herausgenommen werden, ohne daß für die in diesem Bereich vorhandenen Förderplatten 3 eine zusätzliche Unterstützung vorgesehen werden muß, da sich der vertikale Zapfen 26 einer jeden Förderplatte 3 auf dem Steg der U-Schiene 28 abstützt. Hieraus ist ersichtlich, daß für Wartungszwecke oder Reparaturarbeiten lediglich die zu wartenden oder auszutauschenden Teile entnommen werden, ohne eine Demontage des kompletten Plattenbandförderers durchführen zu müssen.

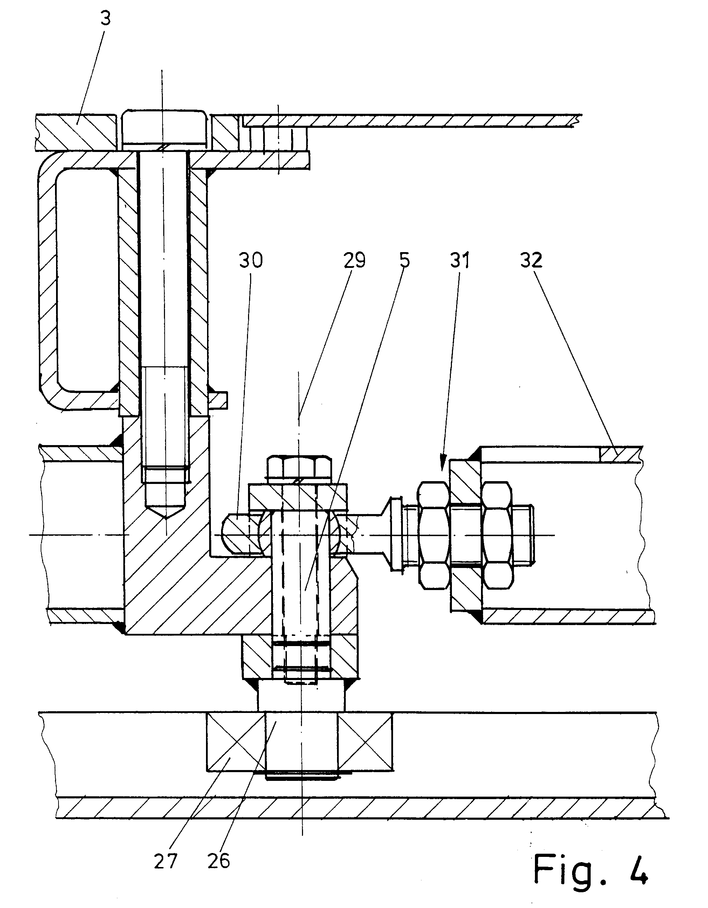

Der in Figur 4 dargestellte Schnitt zeigt vereinfacht eine durch den Gelenkpunkt 5 verlaufende vertikale Gelenkachse 29, die gleichzeitig die Achse des vertikalen Zapfens 26 ist, an dessen unteren Ende die Führungsrolle 27 angeordnet ist.

Der Gelenkpunkt 5 ist ortsfest und ausgerichtet zur Förderplatte 3 angeordnet und verschraubt. Die nachfolgende Föderplatte 3 wird nunmehr über ein Kopfstück 30 vom vertikalen Zapfen 26 drehbeweglich gehalten und mit Hilfe einer Justiereinrichtung 31 so mit einem starren Kettenglied 32 der nachfolgenden Förderplatte 3 verbunden, welche selbst ebenfalls in ihrer Mitte einen Gelenkpunkt 5 trägt, daß eine eindeutige Bewegung der Konvex-Konkav-Flächen der einzelnen Förderplatten 3, die hintereinander angeordnet sind, erreicht wird.

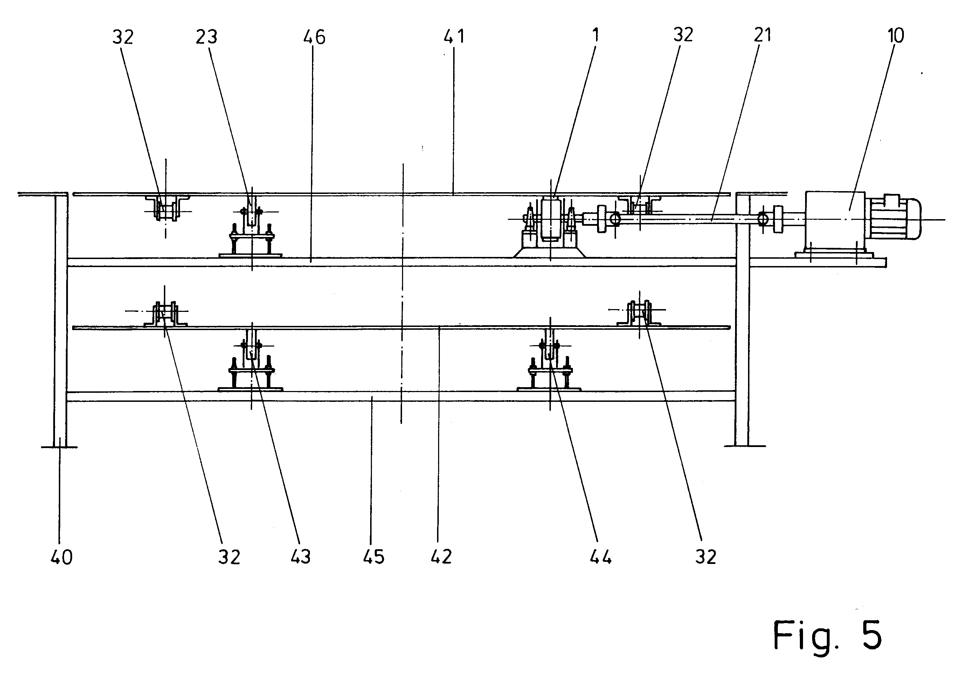

Der in Figur 5 dargestellte Schnitt durch einen vertikal umlaufenden Plattenbandförderer mit Antrieb ist auf einem ein Querhaupt bildenden Gestell 40 angeordnet. Das vorlaufende Trum 41 des Plattenbandförderers wird von dem Motor 10 über die Gelenkwelle 21 und dem Gurtförderer 1 über einen Teil des vorlaufenden Trums an dessen Unterseite angetrieben, während sich das vorlaufende Trum 41 sonst über die Abstützrollen 23 abstützt.

Die einzelnen Förderplatten sind über die starren Förderglieder 32 verbunden. Hierdurch entsteht ebenfalls ein geschlossener Plattenbandförderer, der vertikal umläuft, wobei die beiden nicht dargestellten Umlenkstellen zwischen dem vorlaufenden Trum 41 und dem rücklaufenden Trum 42 nur noch als Spannstellen und nicht mehr als eine Spannstelle und eine Antriebsstelle ausgebildet werden müssen. Im rücklaufenden Trum 42 stützt sich der Plattenbandförderer mit seinen starren Kettengliedern 32 auf Stützrollen 43, 44 ab, welche auf einem Holm 45 des Gestells 40 angeordnet sind. Die Abstützrollen 23 für das vorlaufende Trum 41 und der Gurtförderer 1 stützen sich auf einem Träger 46 ab.

Durch den Antrieb des Plattenbandförderers mittels Gurtförderer 1 im vorlaufenden Trum wird, wie bereits erwähnt, auch das bisherige Antriebsrad für den Plattenbandförderer zum reinen Umlenkrad für den Plattenbandförderer. Damit entfällt gleichzeitig der ruckartige Antrieb des Plattenbandförderers zufolge des Polygonablaufs des Plattenbandförderers über das Antriebsrad. Diese ruckartige Bewegung des Plattenbandförderers trat insbesondere durch die nicht vermeidbare Lose zwischen den Kettengliedern 32 auf, wenn während des Antriebs zunächst unter Überwindung der Lose ein Weitertransport des Plattenbandförderers bewirkt wurde. Wird der Plattenbandförderer jedoch jetzt nur noch über die nicht dargestellten Umlenkräder umgelenkt, die auch als Spannstationen ausgebildet sein können, wird zufolge Aufliegen der einzelnen Platten des Plattenbandförderers auf dem Gurtförderer 1 ein ruckfreier Weitertransport erreicht und somit auch der bisher durch den Antrieb auftretende Verschleiß der starren Kettenglieder 32 vermieden.

## Patentansprüche

1. Kurvengängiger Plattenbandförderer (2) bei dem die einzelnen Förderplatten (3) mittels Kettengliedern gelenkig miteinander verbunden sind und die Plattenbandunterseiten (22) auf mindestens einem Teil ihres im wesentlichen horizontalen Förderverlaufs reibschlüssig (5, 6) mit einem angetriebenen Gurtförderer (1) verbunden sind und wobei zur Abstützung der Plattenbandunterseite (22) zwei parallel zueinander in Förderrichtung verlaufende Reihen mit Abstützungen (23), welche die Bewegung des Plattenförderbandes (2) in Förderrichtung gestatten, vorgesehen sind, dadurch gekennzeichnet, daß eine Reihe in ihrem Verlauf mindestens einen Bereich aufweist, über dessen Länge die Abstützung (23) durch den Gurtförderer (1) ersetzt ist.

2. Plattenbandförderer nach Anspruch 1, dadurch gekennzeichnet, daß im Bereich der reibschlüssigen Verbindung sich die Plattenförderbandunterseite (22) auf dem angetriebenen Gurtförderer (1) abstützt.

3. Plattenbandförderer nach Anspruch 1 oder 2, dadurch gekennzeichnet, daß die Längsachsen der Antriebs- und Umlenkrollen (11-14) des Gurtförderers (1) im wesentlichen senkrecht zur Förderplattenebene verlaufen.

4. Plattenbandförderer nach Anspruch 3, dadurch gekennzeichnet, daß die Förderplatten (3) mit außermittigen Mitnehmern (9) zur Beaufschlagung durch den Gurtförderer (1) versehen sind.

5. Plattenbandförderer nach Anspruch 3, dadurch gekennzeichnet, daß der Gurtförderer (1) an den Gelenkpunkten (5) zwischen den Förderplatten (3) angreift.

6. Kurvengängiger Plattenbandförderer nach einem der vorhergehenden Ansprüche, dadurch gekennzeichnet, daß die Förderplatten (3) in horizontaler Richtung von den gelenkig verbundenen einer an einer in Förderrichtung verlaufenden U-Schiene (28) entlanggeführten Kettengliedern (32) geführt werden und daß die Führung in vertikaler Richtung im Antriebsbereich von dem angetriebenen Gurtförderer (1) und den ihm zugeordneten Abstützungen (23) der anderen Reihe bewirkt wird.

7. Kurvengängiger Plattenbandförderer nach Anspruch 6, dadurch gekennzeichnet, daß die gelenkig (26, 30) verbundenen Kettenglieder (32) von den Schenkeln einer U-Schiene (28) im Abstand von deren Steg mittels an den Kettengliedern (32) angeordneten Rollen (27) geführt werden.

## Claims

1. Curved apron conveyor (2), in which the individual conveyor plates (3) are articulated relative to each other by means of chain links, and the undersides of the apron conveyor (22) are in friction contact (5,6) over at least part of their essentially horizontal conveying distance with a driven belt conveyor (1), and in which two rows of supports (23) are provided to support the apron conveyor underside, running parallel to one another in the conveying direction and enabling movement of the apron conveyor in the conveying direction, characterized in that one row has at least one section in which the support (23) is replaced by the belt conveyor (1) over its length.

2. Apron conveyor in accordance with claim 1, characterized in that in the area of friction contact the underside of the apron conveyor (22) is supported on the driven belt conveyor (1).

3. Apron conveyor in accordance with claim 1 or claim 2, characterized in that the longitudinal axes of the head and tail pulleys (11-14) of the belt conveyor (1) are essentially perpendicular to the conveyor plate plane.

4. Apron conveyor in accordance with claim 3, characterized in that the conveyor plates (3) are fitted with off-centre drivers (9) upon which the belt conveyor (1) acts.

5. Apron conveyor in accordance with claim 3, characterized in that the belt conveyor (1) acts upon the articulation points (5) between the conveyor plates (3).

6. Curved apron conveyor in accordance with one of the preceding claims, characterized in that the conveyor plates (3) are guided in the horizontal direction by the articulated chain links (32), which are guided along a channel section (28) running in the conveying direction, and in that the guiding action in the vertical direction in the drive area is effected by the driven belt conveyor (1) and the supports attributed to the latter (23) in the other row.

7. Curved apron conveyor in accordance with claim 6, characterized in that the articulated (26, 30) chain links (32) are guided by the sides of a channel section (28) at a distance corresponding to its web, by means of rollers fitted on the chain links.

## Revendications

1. Transporteur à palettes (2) curviligne, dans lequel les différentes palettes de transport (3) sont reliées entre elles de manière articulée par des maillons de chaîne et les faces inférieures des palettes (22) sont reliées sur au moins une partie de leur parcours sensiblement horizontal, par friction (5, 6) avec un transporteur à courroie (1) entraîné, et dans lequel pour soutenir la face inférieure des palettes (22), sont prévues deux rangées, parallèles entre elles dans le sens du transport, d'appuis (23), qui autorisent le déplacement de la bande de transport à palettes (2) dans le sens du transport, caractérisé en ce qu'une rangée présente dans son parcours, au moins une zone sur la longueur de laquelle l'appui (23) est remplacé par le transporteur à courroie (1).

2. Transporteur à palettes selon la revendication 1, caractérisé en ce que dans la zone de la liaison par friction, la face inférieure (22) du transporteur à palettes prend appui sur le transporteur à courroie (1) entraîné.

3. Transporteur à palettes selon la revendication 1 ou 2, caractérisé en ce que les axes longitudinaux des poulies d'entraînement et de renvoi (11 à 14) du transporteur à courroie (1) sont sensiblement perpendiculaires au plan des palettes de transport.

4. Transporteur à palettes selon la revendication 3, caractérisé en ce que les palettes de transport (3) sont pourvues d'entraîneurs (9) excentrés sollicités par le transporteur à courroie (1).

5. Transporteur à palettes selon la revendication 3, caractérisé en ce que le transporteur à courroie (1) agit aux points d'articulation (5) entre les palettes de transport (3).

6. Transporteur à palettes curviligne selon l'une des revendications précédentes, caractérisé en ce que les palettes de transport (3) sont guidées horizontalement par les maillons de chaîne (32) reliés de manière articulée, guidés le long d'un rail en U (28) s'étendant dans la direction de transport et en ce que le guidage en direction verticale est assuré dans la zone d'entraînement par le transporteur à courroie (1) entraîné et par les appuis 23, qui lui sont associés, de l'autre rangée.

7. Transporteur à palettes curviligne selon la revendication 6, caractérisé en ce que les maillons de chaîne (32) reliés de manière articulée (26, 30) sont guidés par les côtés d'un rail en U (28), à distance de leur âme, au moyen de galets (27) placés sur les maillons de chaîne (32).
